# EUROPÄISCHE PATENTANMELDUNG

(11) **EP 3 127 749 A1**
(43) Veröffentlichungstag der Anmeldung: **08.02.2017**
(21) Anmeldenummer: 16182205.1
(22) Anmeldetag: 01.08.2016
(51) Int. Cl.: B60R 11/00, B62J 99/00

(54) **SMARTWATCH-HALTERUNG**

(30) Priorität: 06.08.2015 DE 202015005452 U
(71) Anmelder: Canyon Bicycles GmbH, 56073 Koblenz (DE)
(72) Erfinder: FITZ, Sebastian, 55497 Ellern (DE); WEGERLE, Sebastian, 56058 Koblenz (DE)
(74) Vertreter: dompatent von Kreisler Selting Werner - Partnerschaft von Patent- und Rechtsanwälten mbB

(57) **Zusammenfassung**

Eine Smartwatch-Halterung zur Aufnahme einer Smartwatch (14) an einem Fahrrad, insbesondere einem Fahrradlenker oder einem Lenkervorbau, weist eine Befestigungseinrichtung (10) und eine Fixiereinrichtung (12) auf. Die Befestigungseinrichtung (10) dient beispielsweise zur Befestigung an einem Fahrradlenker. Die Fixiereinrichtung weist Halteelemente (36) auf, die mit an einem Gehäuse (40) der Smartwatch (14) vorgesehenen Armbandaufnahmen (38) zur Fixierung zusammenwirken. Optional ist ferner ein Energiespeicher wie ein Akku (48) in einem Basiselement (30) der Fixiereinrichtung (12) vorgesehen.

## Beschreibung

Die Erfindung betrifft eine Smartwatch-Halterung zur Anordnung einer Smartwatch an einem Fahrrad, insbesondere einem Fahrradlenker oder einem Lenkervorbau eines Fahrrads.

Für Smartphones existiert eine Vielzahl von Apps mit inzwischen sehr hohem Funktionsumfang und unterschiedlichen Diensten. Für Smartphones werden ebenfalls Apps angeboten, die für das Fahrradfahren geeignet sind. Derartige Apps weisen die üblichen Funktionen eines Fahrradcomputers, insbesondere die Bestimmung der aktuellen Geschwindigkeit, der Durchschnittsgeschwindigkeit etc. auf. Ferner sind Apps bekannt, mit denen beispielsweise auch eine Radtour aufgezeichnet und/oder geplant werden kann. Hierbei wird zumeist die GPS-Funktion der Smartphones genutzt. Des Weiteren werden inzwischen Smartwatches angeboten. Diese kommunizieren mit einem Smartphone und dienen als zweiter Bildschirm des Smartphones, der entsprechend einer Uhr am Handgelenk getragen werden kann.

Aufgabe der Erfindung ist es, die Nutzung von Smartwatches im Bereich des Fahrradfahrens zu verbessern.

Die Lösung der Aufgabe erfolgt erfindungsgemäß durch die Merkmale des Anspruchs 1.

Die erfindungsgemäße Smartwatch-Halterung dient zur Anordnung einer Smartwatch an einem Fahrrad, insbesondere an einem Fahrradlenker oder an einem Lenkervorbau. Hierzu weist die Smartwatch-Halterung eine Befestigungseinrichtung zur Befestigung am Fahrrad auf. Ferner umfasst die Smartwatch-Halterung eine mit der Befestigungseinrichtung verbundene Fixiereinrichtung. Die Fixiereinrichtung dient zur Aufnahme der Smartwatch. Hierzu weist die Fixiereinrichtung mindestens ein Halteelement auf. Das mindestens eine Halteelement ist derart ausgebildet, dass es mit einem Gehäuse der Smartwatch zusammenwirkt, so dass die Smartwatch ohne Armband in der Fixiereinrichtung gehalten wird. Besonders bevorzugt ist es hierbei, dass das mindestens eine Halteelement der Fixiereinrichtung in eine Armbandaufnahme des Gehäuses eingreift beziehungsweise mit dieser zusammenwirkt. Zum Befestigen der Smartwatch an der Fixiereinrichtung der Smartwatchhalterung wird somit in bevorzugter Ausführungsform in einem ersten Schritt dass Armband vom Gehäuse der Smartwatch entfernt. Anschließend kann die Smartwatch auf einfache Art und Weise an der Fixiereinrichtung angeordnet werden, indem das mindestens eine Halteelement in die Armbandaufnahme eingreift.

Des Weiteren ist es bevorzugt, dass zwei Halteelemente vorgesehen sind, die insbesondere einander gegenüberliegend an der Fixiereinrichtung angeordnet sind. Die beiden Halteelemente greifen vorzugsweise zur Fixierung der Smartwatch in die beiden am Gehäuse der Smartwatch vorgesehenen Armbandaufnahmen ein. Es ist des Weiteren bevorzugt, dass zumindest eines der Halteelemente elastisch ausgebildet ist, so dass die Smartwatch auf einfache Art und Weise in die Halterung eingedrückt werden kann und zumindest eines der Halteelemente insbesondere in die Armbandaufnahme einschnappt. Selbstverständlich sind auch ähnlich ausgestaltete Rastelemente möglich. So könnte das mindestens eine Halteelement beispielsweise derart ausgebildet sein, dass es mit einem an einer Unterseite der Smartwatch vorgesehenen Halteelement zusammenwirkt.

Als Halteelement könnte auch ein zusätzlicher Gehäusedeckel vorgesehen sein, der die Smartwatch an der Fixiereinrichtung hält. Die Smartwatch wäre sodann in einer Art zusätzlichem Gehäuse angeordnet.

Bei der erfindungsgemäßen Verwendung von Smartwatches im Fahrradbereich besteht insbesondere bei längerem Einsatz von vorzugsweise mehreren Stunden die Problematik, dass die in der Smartwatch vorgesehenen Akkus für einen derartig langen und intensiven Einsatz nicht ausgelegt sind. Hierbei muss berücksichtigt werden, dass bei Verwendung der Smartwatch als Fahrradcomputer ununterbrochen Daten von der Smartwatch empfangen oder gegebenenfalls von dieser an das Smartphone gesendet werden müssen, so dass ein hoher Energiebedarf besteht. Bei einer besonders bevorzugten Ausführungsform der Smartwatch-Halterung weist diese daher einen Energiespeicher auf. Der Energiespeicher kann mit der Befestigungseinrichtung und/oder der Fixiereinrichtung verbunden sein. Vorzugsweise handelt es sich bei dem Energiespeicher um mindestens einen wiederaufladebaren Akku. Alternativ kann als Energiespeicher auch eine auswechselbare Batterie vorgesehen werden.

In bevorzugter Weiterbildung weist die Fixiereinrichtung einen mit dem Energiespeicher verbundenen elektrischen Anschluss auf. Dieser dient zur Energieversorgung der Smartwatch. Bei dem elektrischen Anschluss kann es sich um einen Steckkontakt handeln. Dieser kann über ein Zusatzkabel mit der Smartwatch verbunden werden. Bevorzugt ist es, dass der elektrische Anschluss derart an der Fixiereinrichtung vorgesehen ist, dass beim Verbinden der Smartwatch mit dem mindestens einen Halteelement der Fixiereinrichtung automatisch ein Verbinden des mit dem Energiespeicher verbundenen elektrischen Anschlusses mit einem elektrischen Anschluss der Smartwatch erfolgt.
Des Weiteren ist es möglich, als elektrischen Anschluss keinen Steckkontakt vorzusehen, sondern die Energieübertragung durch Induktion zu realisieren.

Der Energiespeicher, bei dem es sich vorzugsweise um einen Akku handelt, kann in einem Fach der Smartwatch-Halterung angeordnet oder über ein Aufnahmeelement mit der Smartwatch-Halterung verbunden sein. Zum Laden des Akkus kann dieser somit auf einfache Weise von der Smartwatch-Halterung abgenommen und geladen werden.

Vorzugsweise ist der Akku in dieser Smartphone-Halterung insbesondere die Fixiereinrichtung der Smartphone-Halterung integriert. Es ist daher weiter bevorzugt, dass mit dem Energiespeicher ein Ladeanschluss verbunden ist. Hierbei handelt es sich beispielsweise um einen Mini-USB-Anschluss um den Akku zum Laden mit einer Stromquelle zu verbinden. Der Ladevorgang des Energiespeichers kann auch durch Induktion und einen entsprechend ausgebildeten Ladeanschluss erfolgen.

Insbesondere bei der Ausführungsform der Erfindung, bei der der Akku in die Fixiereinrichtung integriert ist, ist es bevorzugt, dass die Fixiereinrichtung lösbar und nicht einstückig mit der Befestigungseinrichtung verbunden ist. Hierdurch ist es möglich auf einfache Weise die Fixiereinrichtung zusammen mit dem Akku zum Laden abzunehmen. Die Verbindung zwischen der Befestigungseinrichtung und der Fixiereinrichtung erfolgt vorzugsweise über eine einfach lösbare Verbindung wie eine Rastverbindung, einen Bajonettverschluss oder dergleichen.

Die Befestigungseinrichtung der Smartwatch-Halterung weist beispielsweise eine Schelle auf, um eine einfache Befestigung an einem Fahrradlenker zu realisieren. Zur Befestigung an einen Lenkervorbau kann die Befestigungseinrichtung derart ausgebildet sein, dass sie ein oder mehrere Ausnehmungen zur Aufnahme von Schrauben aufweist. Hierbei können die Schrauben genutzt werden, mit denen die Vorbaukappe zur Fixierung des Lenkers fixiert wird. Es ist hierbei gegebenenfalls lediglich erforderlich längere Schrauben zu verwenden.

Nachfolgend wird die Erfindung anhand einer bevorzugten Ausführungsform unter Bezugnahme auf die anliegenden Zeichnungen näher erläutert.

Es zeigen:

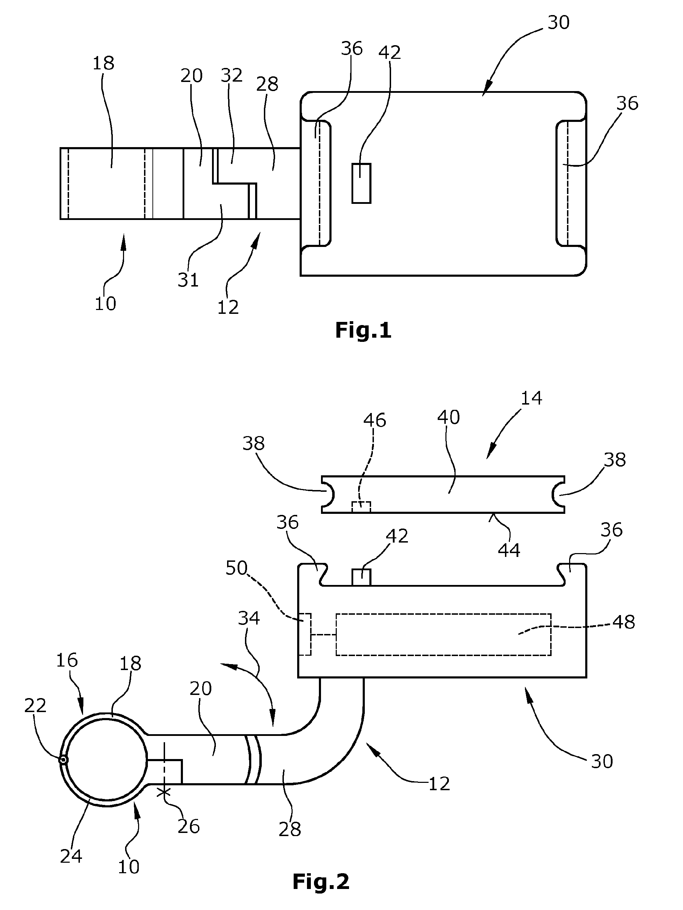

- Fig. 1: eine schematische Draufsicht einer bevorzugten Ausführungsform der Smartwatch-Halterung und
- Fig. 2: eine schematische Seitenansicht der in Fig. 1 dargestellten Smartwatch-Halterung zusammen mit einer Smartwatch.

Die Smartwatch-Halterung weist in der dargestellten Ausführungsform eine Befestigungseinrichtung 10 zur Befestigung an einem Fahrradlenker auf. Mit der Befestigungseinrichtung 10 ist eine Fixiereinrichtung 12 verbunden. Die Fixiereinrichtung 12 dient zur Aufnahme einer Smartwatch 14. Im dargestellten Ausführungsbeispiel weist die Befestigungseinrichtung 10 eine Schelle 16 auf. Hierbei ist ein erstes Schellenelement 18 fest mit einem Arm 20 der Befestigungseinrichtung 10 verbunden. Über ein Gelenk 22 ist ein zweites Schellenelement 24 schwenkbar mit dem ersten Schellenelement 18 verbunden. Ein Schließen der Schelle kann mit Hilfe einer schematisch dargestellten Schraube 26 erfolgen. Alternativ ist auch das Vorsehen von Rastelementen möglich.

Die Fixiereinrichtung 12 weist einen Arm 28 auf, der im dargestellten Ausführungsbeispiel fest mit einem Basiselement 30 der Fixiereinrichtung verbunden ist. Der Arm 28 der Fixiereinrichtung 12 ist mit dem Arm 20 der Befestigungseinrichtung verbunden. Hierbei handelt es sich in bevorzugter Ausführungsform um eine lösbare Verbindung. Im dargestellten Ausführungsbeispiel weisen die beiden Arme 20, 28 Ansätze 31, 32 auf, die einander gegenüber liegen. Die Verbindung kann an den Anlageflächen der beiden Ansätze 31, 32 beispielsweise über Rastelemente, einen Bajonettverschluss oder dergleichen erfolgen. Insbesondere ist es möglich, Rastelemente vorzusehen, mit denen die beiden Arme 20, 28 in unterschiedlichen Stellungen miteinander verbunden werden können, so dass auf einfache Weise die Neigung der Fixiereinrichtung 12 und somit der Smartwatch 14 in Richtung eines Pfeils 34 verändert werden kann.

Das Basiselement 30 der Fixiereinrichtung 12 weist im dargestellten Ausführungsbeispiel zwei einander gegenüberliegende Halteelemente 36 auf, wobei zumindest eines der beiden Halteelemente 36 elastisch ausgebildet ist. Zum Fixieren der Smartwatch 14 an dem Basiselement 30 greifen die nasenförmigen Ansätze der Halteelemente 36 jeweils in einander gegenüberliegende Ausnehmungen 38 an einem Gehäuse 40 der Smartwatch 14 ein. Bei den Ausnehmungen 38 handelt es sich insbesondere um Armbandaufnahmen, die zur Verbindung eines Armbands mit der Smartwatch 14 dienen.

Zwischen den beiden Halteelementen 36 ist im dargestellten Ausführungsbeispiel ein elektrischer Anschluss 42 angeordnet. Hierbei handelt es sich beispielsweise um einen elektrischen Stecker. Dieser wird beim Verbinden der Smartwatch 14 mit dem Basiselement 30 automatisch in einen an einer Unterseite 44 der Smartwatch 14 vorgesehenen Steckkontakt 46 eingefügt.

Der elektrische Kontakt 42 ist mit einem Energiespeicher wie einem Akku 48 verbunden. Hierdurch ist es möglich, die Smartwatch 14 über einen langen Zeitraum beispielsweise als Fahrradcomputer zu nutzen. Zum Aufladen des Akkus 48 ist ein weiterer elektrischer Anschluss 50 am Basiselement 30 vorgesehen. Im dargestellten Ausführungsbeispiel kann der Arm 28 der Fixiereinrichtung 12 auf einfache Weise von dem Arm 20 der Befestigungseinrichtung 10 gelöst werden, so dass es auf einfache Weise möglich ist, den Akku 48 zu laden.

## Patentansprüche

1. Smartwatch-Halterung zur Anordnung einer Smartwatch (14) an einem Fahrrad, insbesondere einem Fahrradlenker oder einem Lenkervorbau, mit
einer Befestigungseinrichtung (10) zur Befestigung am Fahrrad und
einer mit der Befestigungseirichtung (10) verbundenen Fixiereinrichtung (12) zur Aufnahme der Smartwatch (14),
**dadurch gekennzeichnet, dass**
die Fixiereinrichtung (12) mindestens ein Halteelement (36) aufweist, das mit einem Gehäuse (40) der Smartwatch (14) zusammenwirkt, um diese ohne Armband an der Fixiereinrichtung (12) zu halten.

2. Smartwatch-Halterung nach Anspruch 1, **dadurch gekennzeichnet, dass** das mindestens eine Halteelement (36) in zumindest eine am Gehäuse (40) der Smartwatch (14) vorgesehene Armbandaufnahme eingreift.

3. Smartwatch-Halterung nach Anspruch 1 oder 2, **gekennzeichnet durch** einen mit der Fixiereinrichtung (12) und/oder der Befestigungseinrichtung (10) verbundenen Energiespeicher (48), insbesondere einem Akku.

4. Smartwatch-Halterung nach Anspruch 3, **dadurch gekennzeichnet, dass** die Fixiereinrichtung (12) einen mit dem Energiespeicher (48) verbundenen elektrischen Anschluss (42) zur Energieversorgung der Smartwatch (14) aufweist.

5. Smartwatch-Halterung nach Anspruch 4, **dadurch gekennzeichnet, dass** der elektrische Anschluss (42) derart am Fixierelement (12) angeordnet ist, dass beim Verbinden der Smartwatch (14) mit dem mindestens einen Halteelement (36) automatisch ein Verbinden des elektrischen Anschlusses (42) der Fixiereinrichtung (12) mit einem elektrischen Anschluss (46) der Smartwatch (14) erfolgt.

6. Smartwatch-Halterung nach einem der Ansprüche 3 bis 5, **gekennzeichnet durch** einen mit dem Energiespeicher (48) verbundenen Ladeanschluss (50) zum Laden eines Energiespeichers.

7. Smartwatch-Halterung nach einem der Ansprüche 1 bis 6, **dadurch gekennzeichnet, dass** die Fixiereinrichtung (12) lösbar mit der Befestigungseinrichtung (10) verbunden ist.

8. Smartwatch-Halterung nach einem der Ansprüche 1 bis 7, **dadurch gekennzeichnet, dass** die Befestigungseinrichtung (10) ein Schelle zur Befestigung an einem Fahrradlenker aufweist.

9. Smartwatch-Halterung nach einem der Ansprüche 1 bis 8, **dadurch gekennzeichnet, dass** die Befestigungseinrichtung (10) Ausnehmungen zur Aufnahme von Schrauben aufweist.
